# EUROPEAN PATENT APPLICATION

(11) **EP 4 811 612 A1**
(43) Date of publication of application: **23.09.2026**
(21) Application number: 26164977.6
(22) Date of filing: 16.03.2026
(51) Int. Cl.: H02K 1/276

(54) **ROTOR**

(30) Priority: 21.03.2025 JP 2025046703
(71) Applicant: AISIN CORPORATION, Kariya, Aichi 448-8650 (JP)
(72) Inventor: ISHIBASHI, Yoshiki, Kariya, Aichi 448-8650 (JP); MORISHIMA, Hidekazu, Kariya, Aichi 448-8650 (JP); MIYAJI, Tsuyoshi, Kariya, Aichi 448-8650 (JP)
(74) Representative: Kramer Barske Schmidtchen Patentanwälte PartG mbB

(57) **Abstract**

A rotor (20) includes: a plurality of first and second bonded magnets (MG1) and (MG2); and a rotor core (22), wherein the first bonded magnet (MG1) has a first long side (LS1) and a first width, the second bonded magnet (MG2) has a second long side (LS2) and a second width, the rotor core (22) includes: a pair of first hole portions (41); and a pair of second hole portions (42), the first hole portion (41) includes: a first disposing hole portion (41A); and a first air gap portion (41B), the second hole portion (42) includes: a second disposing hole portion (42A); and a second air gap portion (42B), a smallest width (H1) of a first bridge (B1) is 10% or less of the first long side (LS1), and a smallest width (H2) of a second bridge (B2) is 30% or less of the second long side (LS2).

## Description

### TECHNICAL FIELD

The present disclosure relates to a rotor of a motor.

### BACKGROUND DISCUSSION

JP 2023-102517 A discloses a rotor that is rotatably and concentrically disposed inside a stator and in which a plurality of magnetic poles arranged in a circumferential direction with a q-axis interposed therebetween are formed, the rotor including: a rotor core in which magnet mounting holes, which are provided in a plurality of layers along a radial direction and are arranged symmetrically in the circumferential direction about a d-axis, are formed for each of the magnetic poles; and magnets disposed in the magnet mounting holes, respectively, wherein the rotor core includes a first bridge portion, a second bridge portion, a third bridge portion, and a fourth bridge portion, where the first bridge portion is provided between a pair of first magnet mounting holes, which are included in the magnet mounting holes provided in the plurality of layers along the radial direction and are adjacent to each other across the d-axis, the second bridge portion is provided between a pair of second magnet mounting holes, which are located further inward than the pair of first magnet mounting holes in the radial direction and are adjacent to each other across the d-axis, the third bridge portion is provided between an outer peripheral surface of the rotor core and the first magnet mounting hole, and the fourth bridge portion is provided between the outer peripheral surface of the rotor core and the second magnet mounting hole, and wherein when a smallest width of the first bridge portion is represented by L1, a smallest width of the second bridge portion is represented by L2, a smallest width of the third bridge portion is represented by L3, and a smallest width of the fourth bridge portion is represented by L4, a relationship of L3 < L1 < L4 < L2 is satisfied.

JP 2023-102517 A states that the above configuration can provide a rotor having mechanical strength strong enough for high-speed rotation of a rotating electrical machine.

On the other hand, since the bridge portion serves as a magnetic path of leakage magnetic flux, there is a demand for reducing the width as much as possible.

A need thus exists for a rotor of a motor that can reduce the width of a bridge while taking into account mechanical strength.

### SUMMARY

A rotor according to the present disclosure is a rotor of a motor,
the rotor including:
a plurality of first bonded magnets provided for each magnetic pole;
a plurality of second bonded magnets provided for each magnetic pole; and
a rotor core accommodating the first bonded magnets and the second bonded magnets, wherein
each of the first bonded magnets has a substantially quadrilateral cross section having a first long side and a first width in a direction orthogonal to the first long side,
each of the second bonded magnets has a substantially quadrilateral cross section having a second long side and a second width in a direction orthogonal to the second long side,
the rotor core includes:
   a pair of first hole portions provided symmetrically with respect to a first bridge located on a d-axis on a radially outer side to each accommodate the first bonded magnet; and
   a pair of second hole portions provided symmetrically with respect to a second bridge located on the d-axis on a radially inner side to each accommodate a plurality of the second bonded magnets,
   each of the first hole portions includes:
      a first disposing hole portion in which the first bonded magnet is disposed; and
      a first air gap portion on one side provided between the first disposing hole portion and the first bridge,
      each of the second hole portions includes:
         a second disposing hole portion in which the second bonded magnet is disposed; and
         a second air gap portion on one side provided between the second disposing hole portion and the second bridge,
         a smallest width of the first bridge is 10% or less of a length of the first long side, and
         a smallest width of the second bridge is 30% or less of a length of the second long side of the second bonded magnet on the d-axis side.

The present disclosure provides the rotor of the motor that can reduce the width of the bridge while taking into account mechanical strength.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a cross-sectional view of a motor using a rotor according to an embodiment of the present disclosure;
Fig. 2 is a drawing schematically illustrating a cross section of the rotor according to the embodiment of the present disclosure; and
Fig. 3 is an enlarged detailed view in which a region surrounded by a dotted line in Fig. 2 is enlarged.

### DETAILED DESCRIPTION

Hereinafter, a mode for carrying out the present disclosure (hereinafter, referred to as "embodiment") will be described in detail with reference to the accompanying drawings.

Note that the same elements are denoted by the same numerals or signs throughout the description of the embodiment.

The dimension ratios in the drawings are different from actual dimension ratios, are merely drawn for easy understanding of the description, and do not guarantee that the same portions are drawn with the same dimensions between the drawings.

Furthermore, in the drawings, only some of a plurality of portions having the same attribute may be denoted by reference signs for ease of viewing.

### <<Embodiment>>

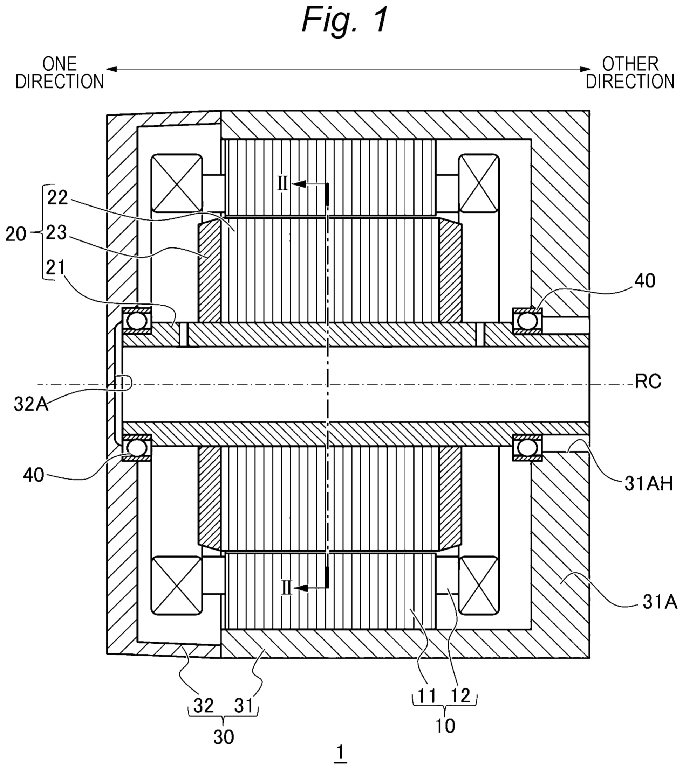

A rotor 20 of a motor 1 according to the embodiment of the present disclosure will be described with reference to Figs. 1 to 3.

The motor 1 using the rotor 20 of the present embodiment can be suitably used for, for example, a rotating electrical machine used for driving an automobile, but may be used for a motor used for other purposes.

Fig. 1 is a cross-sectional view of the motor 1 using the rotor 20 according to the embodiment of the present disclosure, and is a cross-sectional view along a longitudinal direction of a rotor shaft 21.

In the following description, the longitudinal direction of the rotor shaft 21 serving as a rotation axis is referred to as an axial direction, a direction along a rotation direction of the rotor shaft 21 is referred to as a circumferential direction, and a direction on a plane orthogonal to the axial direction is referred to as a radial direction.

In the radial direction, a side away from the rotor shaft 21 is referred to as a radial outer side, and conversely, a side close to the rotor shaft 21 is referred to as a radial inner side.

As illustrated in Fig. 1, the motor 1 is an inner rotor type motor, and the rotor 20 of the present embodiment is a rotor that can be suitably used for the inner rotor type motor.

The motor 1 of the present embodiment includes a stator 10, the rotor 20 disposed on the radially inner side of the stator 10 so as to be rotatable with respect to the stator 10, and a housing 30 that accommodates the stator 10 and the rotor 20.

The opposite axial ends of the rotor shaft 21 of the rotor 20 are rotatably attached to the housing 30 by bearings 40 (in this example, ball bearings), so that the rotor 20 is disposed rotatably with respect to the stator 10.

The housing 30 includes a bottomed cylindrical main body 31 that is opened on one side in the axial direction (left side in Fig. 1), and a lid 32 that closes the opening of the main body 31.

Specifically, the main body 31 is provided with a through hole 31AH in which the other-side end (right-side end in Fig. 1) of the rotor shaft 21 is disposed in a bottom 31A, and the rotor shaft 21 is rotatably supported by the bearing 40 at the through hole 31AH.

The rotor shaft 21 may extend to the outside of the housing 30 through the through hole 31AH of the bottom 31A.

The lid 32 includes a recess 32A that receives one-side end of the rotor shaft 21, and the rotor shaft 21 is rotatably supported by the bearing 40 at the recess 32A.

### [Stator 10]

The stator 10 includes a cylindrical stator core 11 having a plurality of slots (not illustrated) and a stator coil 12 wound in the slot of the stator core 11.

For example, the stator core 11 may be a laminated core formed by axially laminating electrical steel sheets, or may be a powder magnetic core obtained by press-forming metal powder.

Coil ends, which are the ends of the stator coil 12, are located at the opposite axial ends of the stator core 11.

### [Rotor 20]

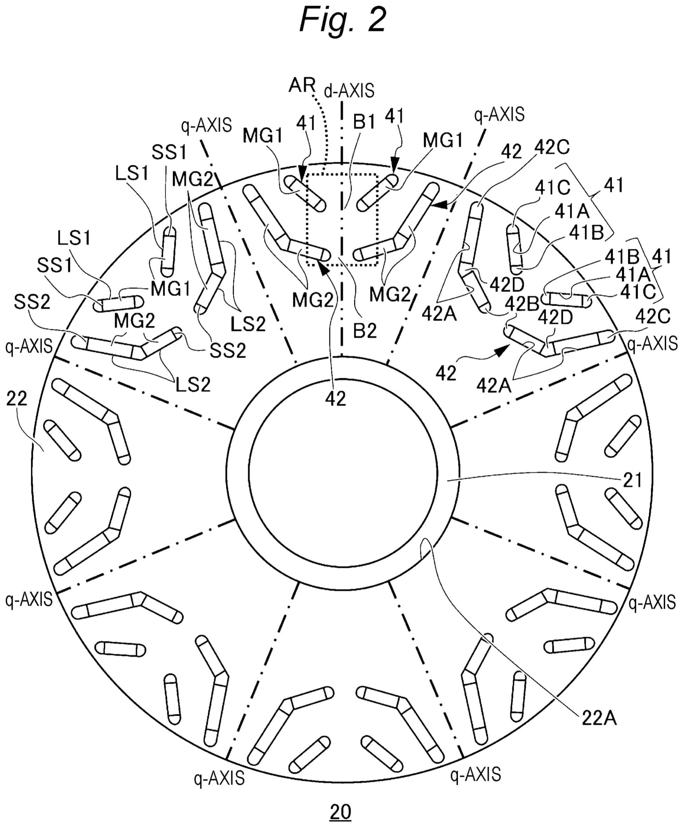

Fig. 2 is a drawing schematically illustrating a cross section of the rotor 20 according to the embodiment of the present disclosure, and is a cross-sectional view taken along line II-II of Fig. 1.

That is, Fig. 2 is a drawing schematically illustrating a cross section orthogonal to the axial direction of the rotor 20.

As illustrated in Fig. 1, the rotor 20 includes the rotor shaft 21 serving as the rotation axis, a cylindrical rotor core 22 including at the center a shaft hole 22A (see Fig. 2) in which the rotor shaft 21 is disposed, and end plates 23 provided at the opposite axial ends of the rotor core 22.

The end plates 23 may be omitted.

The rotor 20 also includes a plurality of first bonded magnets MG1 provided for each magnetic pole (region between q-axes in Fig. 2), a plurality of second bonded magnets MG2 provided for each magnetic pole, and the rotor core 22 that accommodates the first bonded magnets MG1 and the second bonded magnets MG2.

### (Rotor shaft 21)

As illustrated in Fig. 1, the rotor shaft 21 has a hollow cylindrical shape in which a refrigerant can flow, and includes discharge holes for discharging the refrigerant toward the coil ends of the stator coil 12 located at the opposite axial ends of the stator core 11.

As the refrigerant, oil such as ATF can be suitably used, but for example, water or the like may be used.

In the present embodiment, the rotor shaft 21 is a cylindrical member including a hollow portion serving as a refrigerant flow passage through which the refrigerant flows. However, the rotor shaft 21 may be a solid columnar member.

### (First bonded magnet MG1)

Each of the first bonded magnets MG1 is, for example, a magnet having a density of 4.5 g/cm³ or more and 6.5 g/cm³ or less, such as a samarium-iron-nitrogen magnet (SmFeN magnet), and is typically a magnet having a density lower than that of a neodymium magnet (Nd) having a density of 7.4 g/cm³ or more, for example.

As illustrated in Fig. 2, the first bonded magnet MG1 has a substantially quadrilateral cross section having a first long side LS1 and a first short side SS1 as a cross section orthogonal to the axial direction.

In the present embodiment, since the first bonded magnet MG1 has a rectangular cross section orthogonal to the axial direction, the length of a first width in a direction orthogonal to the first long side LS1 is equal to the length of a pair of the first short sides SS1 connecting a pair of the first long sides LS1.

For example, in the first bonded magnet MG1, the first long side LS1 has a length of 11.5 mm and the first short side SS1 (first width) has a length of 4 mm.

The first bonded magnet MG1 may have a substantially quadrilateral shape (rectangular shape) whose corners are chamfered (C-chamfered by about 0.3 mm) to eliminate burrs.

In this case, a length between intersections where extension lines of one of the first long sides LS1 and the pair of first short sides SS1 intersect when the one of the first long sides LS1 and the pair of first short sides SS1 are extended may be regarded as the length of the first long side LS1.

In order to make it easy to remove the first bonded magnet MG1 from a mold for molding the first bonded magnet MG1, the cross section of the first bonded magnet MG1 orthogonal to the axial direction may have a substantially quadrilateral shape such as a trapezoidal shape having a pair of lateral sides inclined inward by about a few degrees (for example, about 3 degrees) with respect to a lower base.

In this case, the lower base may be regarded as the first long side LS1. In a case where the corners are chamfered, a length between intersections where the lower base and the pair of lateral sides connecting the lower base and an upper base intersect when the pair of lateral sides and the lower base are extended may be regarded as the length of the first long side LS1.

### (Second bonded magnet MG2)

Similarly to the first bonded magnet MG1, each of the second bonded magnets MG2 is also a magnet having a density of 4.5 g/cm³ or more and 6.5 g/cm³ or less, such as a samarium-iron-nitrogen magnet (SmFeN magnet), and is typically a magnet having a density lower than that of a neodymium magnet (Nd) having a density of 7.4 g/cm³ or more, for example.

As illustrated in Fig. 2, the second bonded magnet MG2 also has a substantially quadrilateral cross section having a second long side LS2 and a second short side SS2 as a cross section orthogonal to the axial direction.

In Fig. 2, the second long side LS2 is drawn longer in the second bonded magnet MG2 located on the radially outer side than in the second bonded magnet MG2 located on the radially inner side, but actually, both of the second long sides LS2 have the same length.

However, the second long sides LS2 and the second short sides SS2 of the second bonded magnet MG2 on the radially outer side and the second bonded magnet MG2 on the radially inner side are not limited to the same lengths.

In the present embodiment, since the second bonded magnet MG2 has a rectangular cross section orthogonal to the axial direction, the length of a second width in a direction orthogonal to the second long side LS2 is equal to the length of a pair of the second short sides SS2 connecting a pair of the second long sides LS2.

For example, similarly to the first bonded magnet MG1, in the second bonded magnet MG2, the second long side LS2 has a length of 11.5 mm and the second short side SS2 (second width) has a length of 4 mm.

Similarly to the first bonded magnet MG1, the second bonded magnet MG2 may have a substantially quadrilateral shape (rectangular shape) whose corners are chamfered (C-chamfered by about 0.3 mm) to eliminate burrs.

In this case, a length between intersections where extension lines of one of the second long sides LS2 and the pair of second short sides SS2 intersect when the one of the second long sides LS2 and the pair of second short sides SS2 are extended may be regarded as the length of the second long side LS2.

In order to make it easy to remove the second bonded magnet MG2 from a mold for molding the second bonded magnet MG2, the cross section of the second bonded magnet MG2 orthogonal to the axial direction may have a substantially quadrilateral shape such as a trapezoidal shape having a pair of lateral sides inclined inward by about a few degrees (for example, about 3 degrees) with respect to a lower base.

In this case, the lower base may be regarded as the second long side LS2. In a case where the corners are chamfered, a length between intersections where the lower base and the pair of lateral sides connecting the lower base and an upper base intersect when the pair of lateral sides and the lower base are extended may be regarded as the length of the second long side LS2.

### (Rotor core 22)

As illustrated in Fig. 1, the rotor core 22 is a laminated core formed by axially laminating electrical steel sheets in the present embodiment, but may be a powder magnetic core obtained by press-forming metal powder.

As illustrated in Fig. 2, the rotor core 22 includes a pair of first hole portions 41 provided symmetrically with respect to a first bridge B1 located on a d-axis on the radially outer side for each magnetic pole (region between the q-axes) to each accommodate the first bonded magnet MG1.

As illustrated in Fig. 2, the pair of first hole portions 41 has a V shape that opens radially outward from radially inner ends on the d-axis side toward the radially outer side.

Each of the paired first hole portions 41 includes a first disposing hole portion 41A in which the first bonded magnet MG1 is disposed, a first air gap portion 41B on one side provided between the first disposing hole portion 41A and the first bridge B1, and a first air gap portion 41C on the other side provided on the radially outer side.

The first air gap portion 41B on one side and the first air gap portion 41C on the other side function as a flux barrier that reduces leakage magnetic flux of the first bonded magnet MG1.

As illustrated in Fig. 2, the rotor core 22 also includes a pair of second hole portions 42 provided symmetrically with respect to a second bridge B2 located on the d-axis on the radially inner side for each magnetic pole (region between the q-axes) to each accommodate a plurality of the second bonded magnets MG2 (in this example, two of the second bonded magnets MG2).

As illustrated in Fig. 2, the pair of second hole portions 42 has a U shape that opens radially outward as a whole by an inner V-shaped portion on the radially inner side forming a V-shape that opens radially outward at a large angle from radially inner ends on the d-axis side toward the radially outer side, and an outer V-shaped portion on the radially outer side forming a V-shape that opens radially outward at a small angle from the inner V-shaped portion toward the radially outer side.

However, the inner V-shaped portion and the outer V-shaped portion may open radially outward at the same angle to form a V-shape that opens radially outward as a whole.

One second bonded magnet MG2 is accommodated in each of the inner V-shaped portion on the radially inner side and the outer V-shaped portion on the radially outer side.

Specifically, each of the paired second hole portions 42 includes a pair of second disposing hole portions 42A in each of which the second bonded magnet MG2 is disposed, a second air gap portion 42B on one side provided between the second disposing hole portion 42A and the second bridge B2, and a second air gap portion 42C on the other side provided on the radially outer side.

Each of the paired second hole portions 42 also includes an intermediate air gap portion 42D provided between the pair of second disposing hole portions 42A, and an opening angle of opening radially outward changes at the intermediate air gap portion 42D.

The second air gap portion 42B on one side, the second air gap portion 42C on the other side, and the intermediate air gap portion 42D function as a flux barrier that reduces leakage magnetic flux of the second bonded magnet MG2.

When the rotor 20 rotates, stress concentrates on the first bridge B1 and the second bridge B2 due to centrifugal force. This stress increases as the first bonded magnet MG1 and the second bonded magnet MG2 have a larger mass.

Specifically, as the first bonded magnet MG1 has a larger mass, the stress applied to the first bridge B1 tends to increase, and as the second bonded magnet MG2 has a larger mass, the stress applied to the second bridge B2 tends to increase.

Therefore, in the present embodiment, the widths of the first bridge B1 and the second bridge B2 are made narrow in consideration of relationships with the first bonded magnet MG1 and the second bonded magnet MG2, which will be described in detail below.

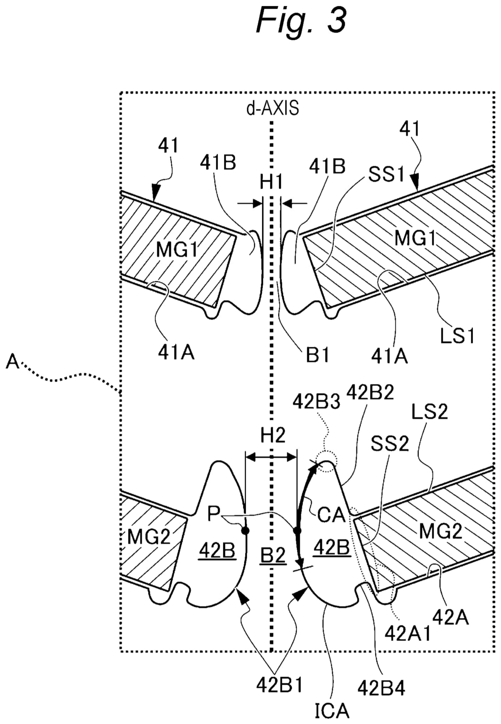

Fig. 3 is an enlarged detailed view in which a region AR surrounded by a dotted line in Fig. 2 is enlarged.

### "First bridge B1"

As illustrated in Fig. 3, the first air gap portions 41B on one side provided symmetrically with respect to the d-axis have a shape gently curved toward the d-axis side, and the first bridge B1 has a smallest width H1.

The smallest width H1 of the first bridge B1 is 10% or less of a length L11 (not illustrated) of the first long side LS1 [(H1 (mm)/L11 (mm)) × 100 (%) ≤ 10 (%)]. Specifically, the smallest width H1 of the first bridge B1 is 0.8 mm (about 7% of the length of the first long side LS1).

The reason why the smallest width H1 can be made small as described above is that the density of the first bonded magnet MG1 is low and the mass of the first bonded magnet MG1 affecting the stress is reduced.

Since the first air gap portions 41B on one side have a shape curved toward the d-axis side, no sharp edge on which stress is likely to concentrate is formed in the first bridge B1, and the stress is dispersed, so that breakage of the first bridge B1 can be further avoided.

The first bridge B1 serves as a magnetic path of the leakage magnetic flux of the first bonded magnet MG1, but how easily the magnetic flux flows depends on the smallest width H1 of the first bridge B1.

Therefore, in the rotor 20 of the present embodiment in which the smallest width H1 of the first bridge B1 can be made smaller than before, the leakage magnetic flux of the first bonded magnet MG1 can be kept low.

On the other hand, the smallest width H1 of the first bridge B1 is preferably 6% or more of the length L11 (not illustrated) of the first long side LS1 [(H1 (mm)/L11 (mm)) × 100 (%) ≥ 6 (%)]. In this manner, the first bridge B1 can be provided with sufficient strength, and breakage of the first bridge B1 can be further avoided.

Since the first short side SS1 (that is, the first width in the direction orthogonal to the first long side LS1) of the first bonded magnet MG1 provided in the rotor 20 cannot be made too large due to a dimensional relationship, the smallest width H1 of the first bridge B1 is defined on the basis of the first long side LS1 having a large influence on a change in mass as described above. However, the smallest width H1 of the first bridge B1 may be defined by an area in consideration of the length of the first short side SS1 (first width) as well.

Specifically, the smallest width H1 of the first bridge B1 is preferably set such that a length L12 (not illustrated) per unit area divided by a cross-sectional area S1 (not illustrated) of the first bonded magnet MG1 [= smallest width H1 (mm)/cross-sectional area S1 (mm²)] is 1.5%/mm or more and 2.5%/mm or less.

That is, it is preferable that 1.5%/mm ≤ L12 × 100 (%/mm) ≤ 2.5%/mm. In this manner, the leakage magnetic flux of the first bonded magnet MG1 can be kept small, and the first bridge B1 can be provided with sufficient strength.

Even in a case where the cross section of the first bonded magnet MG1 is a substantially quadrilateral cross section obtained by chamfering the corners or a substantially quadrilateral cross section such as a trapezoidal cross section, the leakage magnetic flux of the first bonded magnet MG1 can be kept small, and the first bridge B1 can be provided with sufficient strength as long as the cross-sectional area falls within the above-described range as the cross-sectional area S1.

### "Second bridge B2"

As illustrated in Fig. 3, the second air gap portions 42B on one side provided symmetrically with respect to the d-axis include protruding wall portions 42B1 each protruding in a curved shape toward the d-axis side, and the second bridge B2 has a smallest width H2.

The smallest width H2 of the second bridge B2 is 30% or less of a length L21 (not illustrated) of the second long side LS2 [(H2 (mm)/L21 (mm)) × 100 (%) ≤ 30 (%)]. Specifically, the smallest width H2 of the second bridge B2 is 2.6 mm (about 22.6% of the length of the second long side LS2).

The reason why the smallest width H2 of the second bridge B2 is larger than the smallest width H1 of the first bridge B1 is that stress larger than that of the first bridge B1 tends to be applied to the second bridge B2.

The reason why the smallest width H2 can be made small as described above is that the density of the second bonded magnet MG2 is low and the mass of the second bonded magnet MG2 affecting the stress is reduced.

Each of the protruding wall portions 42B1 includes an arc-shaped wall portion CA extending with a predetermined curvature radius from the radially inner side with respect to a position P of the smallest width H2 of the second bridge B2 to the radially outer side with respect to a d-axis-side end 42A1 of the second disposing hole portion 42A.

As described above, since the position P of the smallest width H2 of the second bridge B2 is on the arc-shaped wall portion CA where the stress is dispersed, breakage of the second bridge B2 can be further avoided.

Specifically, when the predetermined curvature radius of the arc-shaped wall portion CA is set to 3 mm or more and 10 mm or less, it is possible to prevent the arc-shaped wall portion CA from becoming a stress concentration part due to the curvature radius being too small and to prevent the arc-shaped wall portion CA from approaching a linear shape to reduce the stress dispersion effect due to the curvature radius being too large.

The second bridge B2 serves as a magnetic path of the leakage magnetic flux of the second bonded magnet MG2, but how easily the magnetic flux flows depends on the smallest width H2 of the second bridge B2.

Therefore, in the rotor 20 of the present embodiment in which the smallest width H2 of the second bridge B2 can be made smaller than before, the leakage magnetic flux of the second bonded magnet MG2 can be kept low.

On the other hand, the smallest width H2 of the second bridge B2 is preferably 20% or more of the length L21 (not illustrated) of the second long side LS2 [(H2 (mm)/L21 (mm)) × 100 (%) ≥ 20 (%)]. In this manner, the second bridge B2 can be provided with sufficient strength, and breakage of the second bridge B2 can be further avoided.

Since the second short side SS2 (that is, the second width in the direction orthogonal to the second long side LS2) of the second bonded magnet MG2 provided in the rotor 20 cannot be made too large due to a dimensional relationship, the smallest width H2 of the second bridge B2 is defined on the basis of the second long side LS2 having a large influence on a change in mass as described above. However, the smallest width H2 of the second bridge B2 may be defined by an area in consideration of the length of the second short side SS2 (second width) as well.

Specifically, the smallest width H2 of the second bridge B2 is preferably set such that a length L22 (not illustrated) per unit area divided by a cross-sectional area S2 (not illustrated) of the second bonded magnet MG2 [= smallest width H2 (mm)/cross-sectional area S2 (mm²)] is 5.0%/mm or more and 7.5%/mm or less.

That is, it is preferable that 5.0%/mm ≤ L22 × 100 (%/mm) ≤ 7.5%/mm. In this manner, the leakage magnetic flux of the second bonded magnet MG2 can be kept small, and the second bridge B2 can be provided with sufficient strength.

Even in a case where the cross section of the second bonded magnet MG2 is a substantially quadrilateral cross section obtained by chamfering the corners or a substantially quadrilateral cross section such as a trapezoidal cross section, the leakage magnetic flux of the second bonded magnet MG2 can be kept small, and the second bridge B2 can be provided with sufficient strength as long as the cross-sectional area falls within the above-described range as the cross-sectional area S2.

The smallest width H2 of the second bridge B2 is preferably 2.4 mm or more and 2.9 mm or less. In this manner, it is possible to provide the second bridge B2 with sufficient strength while keeping the leakage magnetic flux low.

On the other hand, the second air gap portions 42B on one side provided symmetrically with respect to the d-axis include extending wall portions 42B2 each extending from the second disposing hole portion 42A in a direction in which the second short side SS2 (also referred to as a second lateral side) on the d-axis side of the second bonded magnet MG2 on the d-axis side is extended radially outward, and curved wall portions 42B3 each connecting distal ends on the radially outer side of the arc-shaped wall portion CA and the extending wall portion 42B2.

Each of the curved wall portions 42B3 also connects distal ends on the radially outer side of the protruding wall portion 42B1 and the extending wall portion 42B2.

In this manner, each of the second air gap portions 42B on one side protrudes radially outward so as to cut off the magnetic path of the leakage magnetic flux around the second short side SS2 (second lateral side) on the d-axis side of the second bonded magnet MG2, so that the leakage magnetic flux can be further reduced.

Each of the protruding wall portions 42B1 includes an inner arc-shaped wall portion ICA on the radially inner side extending from the radially inner side of the arc-shaped wall portion CA toward the second disposing hole portion 42A with a curvature radius smaller than the curvature radius of the arc-shaped wall portion CA. Thus, while stress concentration is prevented, a width larger than the smallest width H2 of the second bridge B2 is provided, and breakage of the second bridge B2 is easily avoided.

The second air gap portions 42B on one side provided symmetrically with respect to the d-axis also include restricting wall portions 42B4 each provided between the inner arc-shaped wall portion ICA and the second disposing hole portion 42A to protrude radially outward to restrict movement of the second bonded magnet MG2 toward the d-axis side.

The restricting wall portions 42B4 are also provided adjacent to radially inner ends of the protruding wall portions 42B1.

According to the above embodiment, since the bonded magnet (the first bonded magnet MG1 and the second bonded magnet MG2) having a low density is used as the magnet forming the magnetic pole, it is possible to narrow the smallest width H1 of the first bridge B1 to 10% or less of the length of the first long side LS1 of the first bonded magnet MG1 and the smallest width H2 of the second bridge B2 to 30% or less of the length of the second long side LS2 of the second bonded magnet MG2 on the d-axis side while obtaining mechanical strength to avoid breakage of the first bridge B1 and the second bridge B2. As a result, the leakage magnetic flux of the first bonded magnet MG1 and the second bonded magnet MG2 can be reduced.

Although the description has been made on the basis of the specific embodiment, the present disclosure is not limited to the above embodiment, and modifications and improvements to the embodiment are also included in the technical scope of the present disclosure, which is apparent to a person skilled in the art from the description of the claims.

With regard to the above embodiment, the following notes are further disclosed.

### [Note 1]

A rotor of a motor,
the rotor including:
a plurality of first bonded magnets provided for each magnetic pole;
a plurality of second bonded magnets provided for each magnetic pole; and
a rotor core accommodating the first bonded magnets and the second bonded magnets,
wherein
each of the first bonded magnets has a substantially quadrilateral cross section having a first long side and a first width in a direction orthogonal to the first long side,
each of the second bonded magnets has a substantially quadrilateral cross section having a second long side and a second width in a direction orthogonal to the second long side,
the rotor core includes:
   a pair of first hole portions provided symmetrically with respect to a first bridge located on a d-axis on a radially outer side to each accommodate the first bonded magnet; and
   a pair of second hole portions provided symmetrically with respect to a second bridge located on the d-axis on a radially inner side to each accommodate a plurality of the second bonded magnets,
   each of the first hole portions includes:
      a first disposing hole portion in which the first bonded magnet is disposed; and
      a first air gap portion on one side provided between the first disposing hole portion and the first bridge,
      each of the second hole portions includes:
         a second disposing hole portion in which the second bonded magnet is disposed; and
         a second air gap portion on one side provided between the second disposing hole portion and the second bridge,
         a smallest width of the first bridge is 10% or less of a length of the first long side, and
         a smallest width of the second bridge is 30% or less of a length of the second long side of the second bonded magnet on the d-axis side.

### [Note 2]

The rotor according to Note 1, wherein
the smallest width of the first bridge is 6% or more of the length of the first long side, and
the smallest width of the second bridge is 20% or more of the length of the second long side of the second bonded magnet on the d-axis side.

### [Note 3]

The rotor according to Note 1 or 2, wherein
the second air gap portion includes:
a protruding wall portion protruding in a curved shape toward the d-axis side; and
an extending wall portion extending from the second disposing hole portion in a direction in which a second lateral side on the d-axis side of the second bonded magnet on the d-axis side is extended radially outward,
the protruding wall portion includes an arc-shaped wall portion extending with a predetermined curvature radius from the radially inner side with respect to a position of the smallest width of the second bridge to the radially outer side with respect to a d-axis-side end of the second disposing hole portion, and
the second air gap portion includes a curved wall portion connecting distal ends on the radially outer side of the arc-shaped wall portion and the extending wall portion.

### [Note 4]

The rotor according to Note 3, wherein the predetermined curvature radius is 3 mm or more and 10 mm or less.

### [Note 5]

The rotor according to any one of Notes 1 to 4, wherein the smallest width of the second bridge is 2.4 mm or more and 2.9 mm or less.

### [Note 6]

The rotor according to any one of Notes 1 to 5, wherein the first bonded magnet and the second bonded magnet have a density of 6.5 g/cm³ or less.

### [Note 7]

The rotor according to any one of Notes 1 to 6, wherein the smallest width of the second bridge has a length per unit area divided by a cross-sectional area of the second bonded magnet on the d-axis side of 5.0%/mm or more and 7.5%/mm or less.

### [Note 8]

The rotor according to any one of Notes 1 to 7, wherein the smallest width of the first bridge has a length per unit area divided by a cross-sectional area of the first bonded magnet of 1.5%/mm or more and 2.5%/mm or less.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A rotor (20) of a motor (1),
the rotor (20) comprising:
a plurality of first bonded magnets (MG1) provided for each magnetic pole;
a plurality of second bonded magnets (MG2) provided for each magnetic pole; and
a rotor core (22) accommodating the first bonded magnets (MG1) and the second bonded magnets (MG2), wherein
each of the first bonded magnets (MG1) has a substantially quadrilateral cross section having a first long side (LS1) and a first width in a direction orthogonal to the first long side (LS1),
each of the second bonded magnets (MG2) has a substantially quadrilateral cross section having a second long side (LS2) and a second width in a direction orthogonal to the second long side (LS2),
the rotor core (22) includes:
a pair of first hole portions (41) provided symmetrically with respect to a first bridge (B1) located on a d-axis on a radially outer side to each accommodate the first bonded magnet (MG1); and
a pair of second hole portions (42) provided symmetrically with respect to a second bridge (B2) located on the d-axis on a radially inner side to each accommodate a plurality of the second bonded magnets (MG2),
each of the first hole portions (41) includes:
a first disposing hole portion (41A) in which the first bonded magnet (MG1) is disposed; and
a first air gap portion (41B) on one side provided between the first disposing hole portion (41A) and the first bridge (B1),
each of the second hole portions (42) includes:
a second disposing hole portion (42A) in which the second bonded magnet (MG2) is disposed; and
a second air gap portion (42B) on one side provided between the second disposing hole portion (42A) and the second bridge (B2),
a smallest width (H1) of the first bridge (B1) is 10% or less of a length (L11) of the first long side (LS1), and
a smallest width (H2) of the second bridge (B2) is 30% or less of a length (L21) of the second long side (LS2) of the second bonded magnet (MG2) on the d-axis side.

2. The rotor (20) according to Claim 1, wherein
the smallest width (H1) of the first bridge (B1) is 6% or more of the length (L11) of the first long side (LS1), and
the smallest width (H2) of the second bridge (B2) is 20% or more of the length (L21) of the second long side (LS2) of the second bonded magnet (MG2) on the d-axis side.

3. The rotor (20) according to Claim 1 or 2, wherein
the second air gap portion (42B) includes:
a protruding wall portion (42B1) protruding in a curved shape toward the d-axis side; and
an extending wall portion (42B2) extending from the second disposing hole portion (42A) in a direction in which a second lateral side (SS2) on the d-axis side of the second bonded magnet (MG2) on the d-axis side is extended radially outward,
the protruding wall portion (42B1) includes an arc-shaped wall portion (CA) extending with a predetermined curvature radius from the radially inner side with respect to a position (P) of the smallest width (H2) of the second bridge (B2) to the radially outer side with respect to a d-axis-side end (42A1) of the second disposing hole portion (42A), and
the second air gap portion (42B) includes a curved wall portion (42B3) connecting distal ends on the radially outer side of the arc-shaped wall portion (CA) and the extending wall portion (42B2).

4. The rotor (20) according to Claim 3, wherein the predetermined curvature radius is 3 mm or more and 10 mm or less.

5. The rotor (20) according to any one of Claims 1 to 4, wherein the smallest width (H2) of the second bridge (B2) is 2.4 mm or more and 2.9 mm or less.

6. The rotor (20) according to any one of Claims 1 to 5, wherein the first bonded magnet (MG1) and the second bonded magnet (MG2) have a density of 6.5 g/cm³ or less.
